(19) Europäisches Patentamt

European Patent Office

Office européen des brevets

(11) Numéro de publication: **0 406 070 A1**

# (12) DEMANDE DE BREVET EUROPEEN

(21) Numéro de dépôt: 90401761.3

(22) Date de dépôt: 21.06.90

(51) Int. Cl.5: **E02F 9/24**, E02F 9/26,
G01S 11/00, B66C 15/06

(30) Priorité: 26.06.89 FR 8908479

(43) Date de publication de la demande:
**02.01.91 Bulletin 91/01**

(84) Etats contractants désignés:
**BE ES LU NL**

(71) Demandeur: **SCREG ROUTES ET TRAVAUX PUBLICS**
**1, avenue Eugène Freyssinet, Guyancourt**
**F-78065 St Quentin-en-Yvelines(FR)**

(72) Inventeur: **Philippe, Jean**
**11, Passage Saillensait**
**F-94000 Creteil(FR)**
Inventeur: **Serfass, Jean Pierre**
**7, Rue de la Fontaine Narcisse**
**F-60500 Vineuil Saint Firmin(FR)**
Inventeur: **Travert, Michel**
**74, Rue du Ranelagh**
**F-75016 Paris(FR)**

(74) Mandataire: **Moncheny, Michel et al**
**c/o Cabinet Lavoix 2 Place d'Estienne d'Orves**
**F-75441 Paris Cedex 09(FR)**

(54) Système de sécurité pour engin notamment de travaux publics.

㊼ Ce système de sécurité pour engin notamment de travaux publics, présentant des organes de travail, est caractérisé en ce qu'au moins un opérateur (3) associé à l'engin (1) est doté de moyens d'émission (4) de signaux de repérage dudit opérateur et en ce que l'engin (1) est équipé de moyens de réception (5, 6) de ces signaux, de moyens de détection à partir des signaux de repérage émis a partir de l'opérateur, de la présence de l'opérateur (3) dans une zone jugée dangereuse (A) à proximité des organes de travail (2) de l'engin (1), et de moyens de commande de l'arrêt de l'engin (1) activés par les moyens de détection lorsque l'opérateur (3) se trouve dans la zone jugée dangereuse (A).

FIG.1

EP 0 406 070 A1

La présente invention concerne un système de sécurité pour engin notamment de travaux publics, du type présentant des organes de travail.

On connait déjà dans l'état de la technique des systèmes de sécurité pour ce type d'engins.

En effet, ces engins peuvent être équipés par exemple d organes mécaniques empêchant les opérateurs associés à cet engin et travaillant par exemple autour de celui-ci, d'arriver à proximité des organes de travail de ceux-ci afin de limiter les risques d'accidents.

Cependant, ces systèmes de sécurité présentent un certain nombre d'inconvénients dans la mesure où les organes mécaniques font saillie à partir de l'engin, en augmentent le poids et l'encombrement, et sont d une mise en oeuvre difficile par exemple sur un chantier, dans la mesure où celui-ci peut être encombré par exemple par des piquets ou d'autres éléments.

Par ailleurs, il existe également des dispositifs de sécurité optiques dans lesquels un faisceau optique est utilisé pour détecter tout corps étranger à l'engin, se trouvant dans le voisinage des organes de travail, pour arrêter celui-ci.

Ces dispositifs présentent également un certain nombre d'inconvénients, car ils ne permettent pas non plus de faire la différence entre un opérateur et par exemple un piquet.

On conçoit donc que les dispositifs proposés dans l'état de la technique, présentent des inconvénients notamment au niveau de la discrimination entre des opérateurs associés à l'engin, dont la présence est interdite à proximité des organes de travail et des éléments du chantier, comme par exemple des piquets ou autres, dont la présence peut être tolérée à côté de ces organes.

On connaît également d'après le document US-A-4 516 117, un dispositif de contrôle de la position d'un organe d'une machine dans une certaine plage de déplacement déterminée.

Le document FR-A-2 565 925 décrit quant à lui un système de sécurité pour engins mobiles sur un même tracé, comportant des moyens d'émission et de réception de signaux permettant de réguler la distance entre les engins,

Enfin, le document FR-A-2 438 876 décrit également un procédé et un dispositif pour éviter les collisions entre deux mobiles circulant sur une même voie, comportant des moyens d'émission et de réception de signaux, permettant de contrôler le déplacement des mobiles.

Tous ces documents concernent donc le contrôle de la position de deux organes l'un par rapport à l'autre, par exemple sur un même tracé, mais aucun ne décrit l'utilisation de ces dispositifs de repérage pour assurer la sécurité d'opérateurs autour d'un engin de travaux publics.

Le but de l'invention est donc de résoudre ces problèmes en proposant un système de sécurité qui soit simple, peu encombrant, très fiable et qui permette d'opérer une discrimination précise entre des opérateurs et des éléments de chantier.

A cet effet, l'invention a pour objet un système de sécurité pour engin notamment de travaux publics, du type présentant des organes de travail, caractérisé en ce qu'au moins un opérateur associé à l'engin est doté de moyens d'émission de signaux de repérage dudit opérateur et en ce que l'engin est équipe de moyens de réception de ces signaux, de moyens de détection à partir des signaux de repérage émis à partir de l'opérateur, de la présence de l'opérateur dans une zone jugée dangereuse à proximité des organes de travail de l'engin et de moyens de commande de l'arrêt de l'engin, activés par les moyens de détection lorsque l'opérateur se trouve dans la zone jugée dangereuse.

Avantageusement, l'engin comporte des moyens de détection de la présence de l'opérateur dans une zone d'alarme autour de la zone jugée dangereuse et des moyens d'alarme visuelle et/ou sonore activés par les moyens de détection, lorsque l'opérateur est dans la zone d'alarme,

Avantageusement également, l'engin comporte des moyens d'émission de signaux de repérage et l'opérateur est doté de moyens de réception de ces signaux, de moyens de détection à partir des signaux de repérage émis à partir de l'engin, de la présence de l'opérateur dans une zone d'alarme autour de la zone jugée dangereuse et de moyens d'alarme sonore et/ou visuelle activés par les moyens de détection, lorsque l'opérateur est dans la zone d'alarme.

L'invention sera mieux comprise à l'aide de la description qui va suivre, donnée uniquement à titre d'exemple et faite en se référant aux dessins annexés, sur lesquels :

- la Fig.1 représente un schéma synoptique illustrant un premier mode de réalisation d'un système de sécurité pour engin notamment de travaux publics, selon l'invention;

- la Fig.2 représente un organigramme illustrant le fonctionnement du premier mode de réalisation du système de sécurité, réprésenté sur la Fig. 1,

- la Fig.3 représente un schéma synoptique d'un autre mode de réalisation d'un système de sécurité selon l'invention; et

- la Fig.4 représente un organigramme illustrant le fonctionnement du système de sécurité représenté sur la Fig.3.

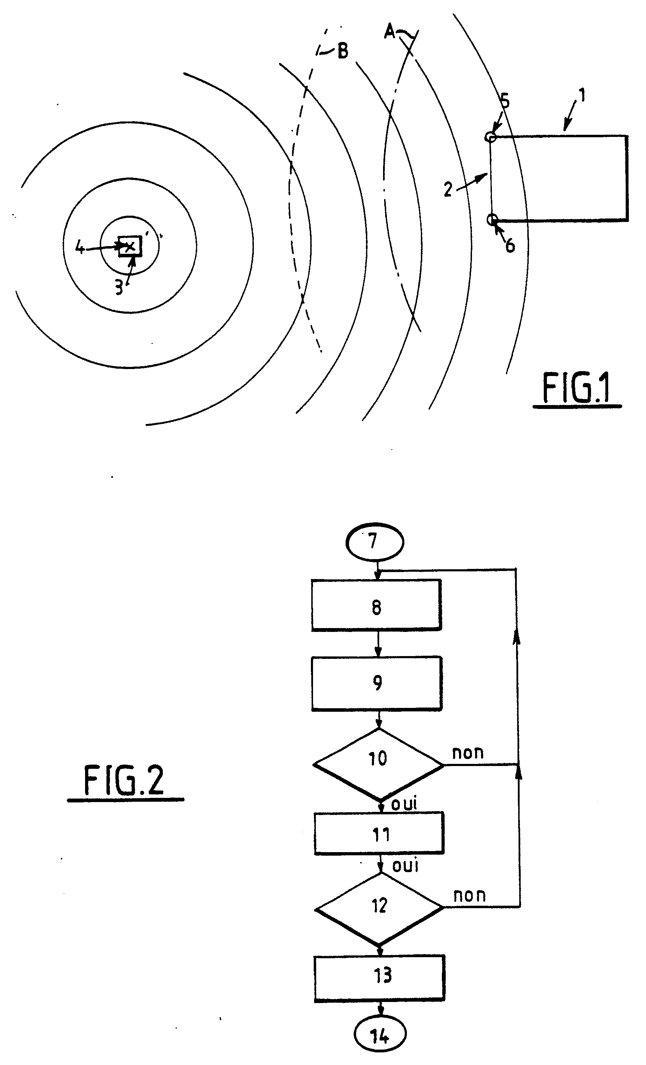

Ainsi qu'on peut le voir sur la Fig. 1, un système de sécurité selon l'invention s'applique par exemple à un engin notamment de travaux publics 1 présentant, par exemple en 2, des organes de travail. Cet engin peut par exemple être constitué par un compacteur, un finisseur ou tout autre engin comportant des organes de travail pouvant être dangereux pour des opérateurs associés à cet engin.

Ces opérateurs sont par exemple constitués par du personnel de terrassement ou autre, travaillant en coopération avec l'engin et il peut arriver dans certain cas que ces opérateurs soient beaucoup trop à proximité des organes de travail et par conséquent, soient victimes d'accidents plus ou moins graves.

Pour résoudre ces problèmes, au moins un opérateur illustré par un carré 3 sur cette figure 1, est équipé de moyens d'émission de signaux de repérage de cet opérateur, ces moyens étant repérés par une croix 4 à l'intérieur du carré 3 illustrant l'opérateur. Ces moyens d'émission peuvent par exemple être constitués par des moyens d'émission omnidirectionnels et les signaux émis sont détectés par des moyens de réception de ces signaux embarqués à bord de l'engin. Ces moyens de réception comportent par exemple deux capteurs 5 et 6 disposés en deux endroits différents de l'engin.

Ces capteurs sont par exemple disposés de part et d'autre des organes de travail de celui-ci pour permettre une détermination de la position de l'opérateur par rapport à ces organes.

Ainsi, et comme cela sera décrit plus en détail par la suite, ces moyens de réception des signaux de repérage émis à partir de l'opérateur, sont reliés à des moyens de détection à partir de ces signaux, de la présence de l'opérateur dans une zone jugée dangereuse à proximité des organes de travail de l'engin, cette zone étant illustrée par les traits mixtes A sur cette figure.

Cette zone A autour des organes de travail de l'engin, est par exemple une zone interdite aux opérateurs, car trop à proximité des organes de travail et les moyens de détection de la présence d un opérateur dans cette zone, peuvent être reliés à des moyens de commande de l'arrêt de l'engin, activés par ces moyens de détection, lorsque l'opérateur se trouve dans cette zone jugée dangereuse, pour éviter tout accident.

Les moyens d'émission et de réception des signaux peuvent être constitués par tout moyen permettant une détermination de position de manière connue en soi et qui ne sera donc pas décrite plus en détail, tandis que les moyens de détection et les moyens de commande de l'arrêt de l'engin peuvent être constitués par un ensemble à microprocesseur dont le fonctionnement sera décrit plus en détail par la suite.

L'engin peut également comporter des moyens de détection de la présence de l'opérateur dans une zone d alarme illustrée par les traits en pointillés B sur cette figure 1, cette zone d'alarme s'étendant autour de la zone jugée dangereuse A. Dans ce cas, ces moyens de détection peuvent être constitués par l'ensemble à microprocesseur mentionné précédemment et reliés à des moyens d'alarme visuelle et/ou sonore portés par l'engin et activés par les moyens de détection, lorsque l'opérateur est dans la zone d'alarme.

Le fonctionnement de ce mode de réalisation du système selon l'invention est illustré par l'organigramme de la Fig.2. Cet organigramme débute par une phase de départ et d'initialisation 7 suivie d'une phase 8 de réception des signaux émis par les moyens 4 d'émission des signaux de repérage de l'opérateur 3, par les moyens de réception 5 et 6 de l'engin.

A partir des signaux de repérage reçus par les moyens de réception de l'engin, l'ensemble à microprocesseur dont est équipé l'engin, détermine, en 9, la position de l'opérateur.

Cette position est déterminée par exemple par rapport aux organes de travail dont est muni cet engin et, en 10, est prévu un test pour déterminer si l'opérateur est dans la zone d alarme, c'est à dire dans la zone illustrée par les pointillés B sur la figure 1.

Si la réponse à ce test est négative, on est ramené à l'étape 8 de réception des signaux. Si la réponse à ce test en 10 est positive, on est amené a une étape 11 d'activation des moyens d'alarme visuelle et/ou sonore dont est doté l'engin.

Ces moyens d'alarme permettent à l'opérateur de savoir qu'il est dans une zone d alarme et attirent son attention sur la présence de l'engin et plus particulièrement des organes de travail de celui-ci. Cette zone d'alarme B constitue donc une zone intermédiaire avant la commande de l'arrêt de l'engin.

Après cette étape 11 d'activation des moyens d'alarme, est prévu un test en 12 pour déterminer si l'opérateur est dans la zone dangereuse illustrée par les traits mixtes A sur la Fig.1. Si la réponse à ce test est négative, on est ramené à l'étape de réception des signaux en 8, tandis que si la réponse à ce test en 12, est positive, on est amené à l'étape 13 d'arrêt de l'engin, dans la mesure où l'opérateur se trouve à proximité des organes de travail, ce qui est dangereux.

En 14, est prévue la fin de l'organigramme.

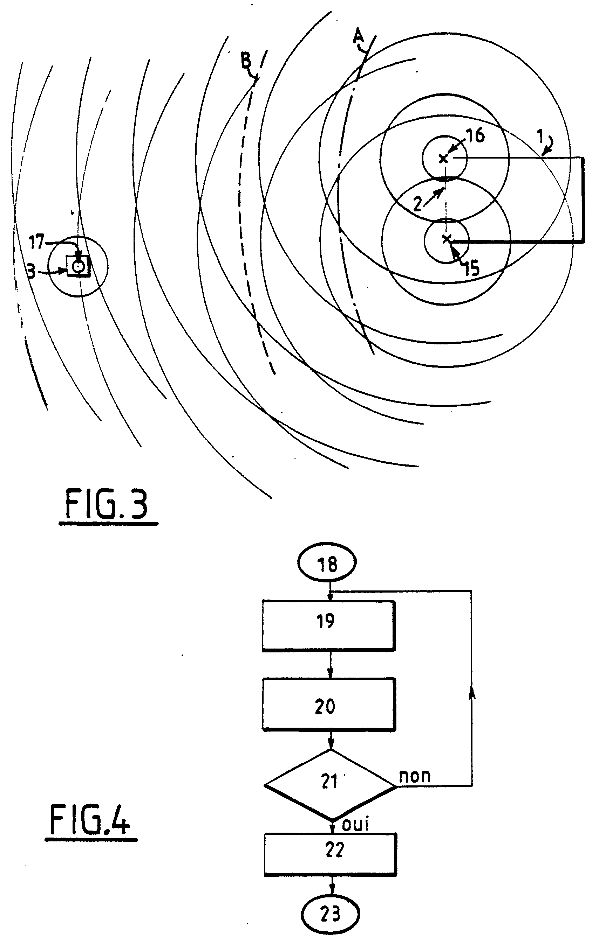

Selon un autre mode de réalisation représenté à la Fig.3, qui peut constituer un complément à ce qui vient d'être décrit, le système de sécurité selon l'invention, peut également comporter sur l'engin 1 comprenant les organes de travail 2, des moyens d'émission de signaux de repérage de l'engin, par exemple au nombre de deux 15 et 16, disposés de part et d'autre des organes de travail de cet engin.

Ces moyens émettent des signaux en direction de l'opérateur 3 et plus particulièrement de moyens de réception 17 de ces signaux dont est équipé cet opérateur. Ces moyens de réception sont reliés a des moyens de détection à partir de ces signaux, de la présence de l'opérateur dans la zone d'alarme B autour de la zone jugée dangereuse A. Ces moyens de détection sont reliés à des moyens d'alarme sonore et/ou visuelle dont est doté l'opérateur, ces moyens étant activés par les moyens de détection lorsque l'opérateur est dans la zone d'alarme afin de l'avertir de la présence de l'engin.

Le fonctionnement de ce système est illustré sur la Fig.4. Cet organigramme débute par une phase de départ et d'initialisation 18, suivie d'une phase 19 de réception des signaux émis par les moyens d'émission 15 et 16 de l'engin de travaux publics 1, par des moyens de réception 17 de l'utilisateur 3.

En 20, est prévue une étape de détermination de la position de l'opérateur à partir des signaux reçus en 19, par rapport à l'engin et plus particulièrement aux outils de travail de celui-ci.

Cette détermination est réalisée par exemple par un ensemble à microprocesseur dont est doté l'utilisateur 3. En 21, est prévu un test pour déterminer si l'opérateur est dans la zone d'alarme B ou non. Si la réponse à ce test est négative, on est ramené à l'étape 19 de réception de signaux. Si la réponse à ce test en 21, est positive, on est amené à l'étape 22 dans laquelle les moyens d'alarme sonore et/ou visuel le dont est équipé l'opérateur, sont activés pour l'avertir de sa présence dans la zone d'alarme.

En 23, est prévue la fin de cet organigramme.

On conçoit donc que le système de sécurité selon l'invention permet d'opérer une très bonne discrimination entre les opérateurs et les éléments du chantier dans la mesure où seuls les opérateurs ou l'engin sont équipés de moyens permettant leur repérage.

En effet, seul l'un ou plusieurs des opérateurs étant équipés de moyens d'émission et/ou de réception tels que décrits, le système permet donc d'opérer une bonne sélection des circonstances dans lesquelles l'engin doit être arrêté.

Bien entendu, le système selon l'invention peut être utilisé pour d'autres engins que de travaux publics, comme par exemple, des engins agricoles.

Différents systèmes de repérage peuvent être utilisés comme par exemple des systèmes fonctionnant de manière analogue aux systèmes de repérage des navires par radiogoniométrie ou des aéronefs.

Enfin, les moyens de commande de l'arrêt de l'engin peuvent agir sur le moteur et/ou les freins de celui-ci pour l'arrêter de manière connue en soi.

**Revendications**

1. Système de sécurité pour engin notamment de travaux publics, présentant des organes de travail, caractérisé en ce qu'au moins un opérateur (3) associé à l'engin (1) est doté de moyens d'émission (4) de signaux de repérage dudit opérateur et en ce que l'engin (1) est équipé de moyens de réception (5, 6) des signaux, de moyens de détection à partir des signaux de repérage émis à partir de l'opérateur, de la présence de l'opérateur (3) dans une zone jugée dangereuse (A) à proximité des organes de travail (2) de l'engin (1) , et de moyens de commande de l'arrêt de l'engin (1) activés par les moyens de détection lorsque l'opérateur (3) se trouve dans la zone jugée dangereuse (A).

2. Système selon la revendication 1 , caractérisé en ce que l'engin (1) comporte des moyens de détection (5, 6) de la présence de l'opérateur (3) dans une zone d'alarme (B) autour de la zone jugée dangereuse (A), et des moyens d alarme visuelle et/ou sonore activés par les moyens de détection lorsque l'opérateur (3) est dans la zone d' alarme (A).

3. Système selon la revendication 1 ou 2, caractérisé en ·ce que l'engin (1) comporte des moyens d'émission (15, 16) de signaux de repérage et en ce que l'opérateur (3) est doté de moyens de réception (17) desdits signaux, de moyens de détection à partir des signaux de repérage émis à partir de l'engin (1), de la présence de l'opérateur (3) dans une zone d'alarme (B) autour de la zone jugée dangereuse (A), et de moyens d'alarme sonore et/ou visuelle activés par les moyens de détection lorsque l'opérateur (3) est dans la zone d'alarme (B).

_FIG.1_

_FIG.2_

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | US-A-4 516 117 (COUTURE et al.) <br> * En entier * <br> --- | 1-3 | E 02 F 9/24 <br> E 02 F 9/26 <br> G 01 S 11/00 <br> B 66 C 15/06 |
| X,D | FR-A-2 565 925 (L. PERRON) <br> * Revendications 1-3; figures 1,2 * <br> --- | 1-3 | |
| X,D | FR-A-2 438 876 (RAMEAU) <br> * Revendications 1-6; figures 1,2 * <br> --- | 1-3 | |
| A | EP-A-0 072 567 (TULLIS et al.) <br> * Revendications 1-11; figures 1,2,7,8 * <br> --- | 1-3 | |
| A | FR-A-2 550 520 (CAUSSE) <br> * Revendication 1 * <br> --- | 1-3 | |
| A | FR-A-2 592 493 (A. GODEFROY et al.) <br> * Revendications 1-5; figure 1 * <br> ----- | 1-3 | |

### DOMAINES TECHNIQUES RECHERCHES (Int. Cl.5)

E 02 F
B 66 C
G 01 S

Le présent rapport a été établi pour toutes les revendications

| Lieu de la recherche | Date d'achèvement de la recherche | Examinateur |
|---|---|---|
| LA HAYE | 12-09-1990 | ANGIUS P. |